# EUROPEAN PATENT APPLICATION

(11) **EP 3 916 658 A1**
(43) Date of publication of application: **01.12.2021**
(21) Application number: 20176819.9
(22) Date of filing: 27.05.2020
(51) Int. Cl.: G06Q 10/10, G06Q 20/10

(54) **REDUCING UNDETECTED FRAUD AND INCREASING EFFICIENCY IN SETTING UP AND SUPPLY AND PAYMENT SYSTEMS FOR SHARED HOUSEHOLD RESOURCES**

(71) Applicant: MasterCard International Incorporated, Purchase NY New York 10577-2509 (US)
(72) Inventor: CHEREZOVA, Maria, London, W12 7JY (GB); BAGGOTT, James Richard, London, RN19 3LJ (GB); DURBER, Robert Peter, London, SW16 2BB (GB)
(74) Representative: Barker Brettell LLP

(57) **Abstract**

A computer implemented method of improving the efficiency, and anti-fraud capability, of managing finances for a group of individuals, and an anti-fraud system for managing finances for a group of individuals. The computer implemented method comprises receiving shared expenses data (201) and automatically creating a charter (202) comprising a contractual agreement and a list of shared goods and/or services in dependence on the shared expenses data. An authorisation (203) and payment information (204) may be received from each individual of the group of individuals and the charter then executed (205) upon receipt of all of the authorisations and payment information from the entire group of individuals.

## Description

### TECHNICAL FIELD

The present disclosure relates to a computer implemented method of improving the efficiency, and anti-fraud capability, of managing finances and delivering shared goods or services for a group of individuals, and an anti-fraud system for managing finances and delivering shared goods or services for a group of individuals.

### BACKGROUND

Shared housing, in which tenants share occupancy of a dwelling that is subject to a single set of bills and resources, is becoming more commonplace as a greater number of people move to cities, in which space is at a premium and the cost of living can be high.

In these spaces it is often the case that housekeeping tasks and resources may be shared, with house members contributing to the running of the household. In many situations the households are made up of individuals who may not know each other particularly well and trust may be an issue. It is not uncommon to rent just one room in a shared house, with a communal kitchen and living spaces, and to share communal bills between tenants.

Current solutions generally involve a single house member being required to run the household and then chase house members for payments relating to shared goods and services (such as rent to a head landlord, utility bills - such as for heating/power, rates/property taxes, telecommunication services - internet and/or phone lines, and household commodities - generic consumables such as cooking oil, bread, toilet paper, cleaning products etc.) . Some applications and solutions are available for splitting bills and payments, but these require manual updates and place a high administrative burden on users.

In situations where a number of the house members may buy certain products (e.g. shared groceries, such as bread, milk, coffee etc.) and make notes of what they have purchased in order to split costs between the household members then the chance for error by the individual relating to what they bought and how much it cost increases, as does the chance for fraudulent claims of contributions that were not made really.

In one known system the household has a paper list pinned to a wall and people who share the house write on the list the things they buy for communal use, such as bread, or milk, or butter, or dishwasher tablets, washing machine powder, replacement glasses or plates etc. And the household bills, such as electricity or gas or rent, local property taxes, internet service provider charges, are divided up between the occupants. Once a month the list is reviewed and a balancing payment from those who bought less to those who bought more is calculated. The household members then pay the deficit to those who bought more, or sometimes it is necessary to chase errant household members who do not pay their share. They may never end up paying their share and may default on their debt after the debt has been incurred, especially when they leave the shared house and move elsewhere.

Unscrupulous household members can reduce the cost to them by adding onto the list things they did not really buy, maybe say 2 pints of milk when it was one, or go back a week and interleave on the list an entry saying they bought some eggs between two other entries, knowing that no-one will know for sure whether they did or not. Another "scam" is to write an inflated price down on the list. Another "scam" is to buy things that the household has not agreed should be communal - for example a new plant, or a beer for a party that some household members won't drink and did not want.

This breeds a level of distrust, and fear of fraud. Security/accuracy of data is a problem.

It is also time-consuming to work out who owes who what. Another issue is that the honest household members can forget to write down some valid purchases, losing out.

### STATEMENTS OF INVENTION

According to an aspect of the invention there is provided a computer implemented method for improving the efficiency of managing finances for a group of individuals. The group of individuals share a set of expenses, which relate to charged goods and/or services. The method comprises receiving shared expenses data (such as accommodation data), automatically creating a charter in dependence on the shared expenses data, receiving an acceptance from each individual of the group of individuals, receiving payment information for each individual, and upon receipt of the requested signatures and payment information, executing the charter.

The charter is a digitally created agreement capable of being agreed to by each of the group of individuals. The charter may comprise a list portion, which details a list of goods and services which the group of individuals may be agreeing to purchase. The charter may also comprise an agreement portion, which provides a contract to which the individuals are agreeing. The charter may also comprise instructions for executing the charter. The instructions may be computer coded instructions for execution by a computer.

The individuals may natural persons or legal persons or otherwise defined companies or organisations. The group may be made up a mix of the above or may be solely one type. The group may comprise solely natural persons. The group may be house mates in that they share accommodation.

Executing the charter may comprise executing the instructions, or computer coded instructions in order to carry out at least one of: confirming the agreement of the entire group of individuals to the charter, arranging payment from each of the individuals, arranging payment for and/or ordering of the specified goods and/or services.

Creating the charter may comprise automatically generating a recommended list of goods and/or services. The list may be automatically generated in dependence on the shared expenses data. At least one of the individuals may be able to modify the charter manually. For example, the individual may be invited to add extra goods and/or services and/or adjust quantities/frequencies of the goods and/or services. One or more members of the group may be able to override any automatic allocation of costs between members that the system may make and specify a different allocation, with members having visibility of the allocation of costs.

Creating the charter may further comprise automatically generating a recommended purchasing frequency for the goods and/or services in dependence on the shared expenses data. The purchasing frequency may comprises the cadence by which the goods and//or services are provided to the household. The purchasing frequency may also or instead comprise the cadence by which the individuals are debited in order to pay for the goods and/or services.

The method may further comprise calculating a payment contribution for each of the group of individuals, and optionally wherein each of the calculated payment contributions is equal to the other calculated payment contributions.

Optionally the calculated payment contribution for a first individual may be different from that of a second individual. Possibly the second individual has a better room (for example bigger, and/or having an en-suite bathroom). Possibly the second individual does not use a consumable in the charter (for example they may not use milk, coffee or bread etc.). These are circumstances which may warrant different payment amounts between individuals. Other circumstances may be envisaged. There are therefore circumstances where the charter does, and should, allocate some purchased goods and/or services unequally between individuals, but still in a predetermined ratio/manner for each item of goods and/or services.

Executing the charter may comprise actually ordering the goods and/or services by software implemented messages to external goods and/or service providers. The software implemented messages may be provided through APIs (application programming interfaces) associated with the external goods and/or service providers. Executing the charter may also comprise arranging payment for the goods and/or services by software implemented instructions to make payments to the goods and/or service providers. The software implemented instructions may be provided through APIs associated with the external goods and/or service providers.

The method may further comprise receiving a modification request and modifying the charter in dependence on the request.

The modification request may be received from any one of the group of individuals. In this way, should circumstances or preferences change, any individual may propose an update to the charter.

The method may further comprise sending a notification to the group of individuals in dependence upon the receipt of the modification request. Preferably the notification is sent by an e-communication means.

The charter may be modified in accordance with the modification request either unilaterally by any individual (with a notification being sent to the other individuals), or there may be a need for a specified number of members to input their agreement to the modification, or the modification may be blocked if a specified number of the individuals input an objection to the modification.

Any individual may be able to cancel their payment mechanism (e.g. direct debit, scheduled card payments, Apple Pay, Google pay etc.) unilaterally, with notice of said cancellation being sent to the other individuals.

The method may further comprise requesting the acceptance from each of the individuals. The acceptance may be in the form of a digital signature (for example a scanned physical signature, a digital acceptance software, a cryptographic key or any other means by which an individual can securely accede to an agreement).

Requesting the acceptance from each of the individuals may comprise generating a hyperlink. A single hyperlink for sharing with each individual may be generated or one hyperlink per individual may be generated.

Requesting the acceptance from each of the individuals may further comprise sending the hyperlink to each individual.

The shared expenses data may comprise data relating to various data categories.

The data categories may comprise one or more of: a number of rooms in a shared accommodation shared by the group of individuals, a room type for each of the rooms in the shared accommodation, a number of people living in the shared accommodation, a geographic location of the shared accommodation, and a budget level of the shared accommodation. Other data categories may also be useful. Any of these data categories may be used as each is useful for forming a profile of the household, which may then be used automatically to propose a list of goods and/or services that may be required by the household.

The method may further comprise connecting to a third party data source (for example an online shopping platform or a price comparison website - such as one for comparing utility or internet service provider prices) and populating the list of goods and/or services with data received from the third party data source (for example the data may relate to goods, such as groceries or other household consumables, and/or the data mare relate to services such as tariffs and details for utilities or media packages).

Connecting to a third party data source may be implemented through an API of the third party data source.

According to another aspect of the invention there is provided a computer system for managing finances for a group of individuals, the group of individuals sharing a set of expenses relating to charged goods and/or services. The computer system comprises: a server, the server configured to provide a user interface for collecting shared expenses data on a personal computing device of at least one of the group individuals, a processor, the processor configured to automatically generate a charter in dependence on the collected shared expenses data, wherein the server is further configured to provide a payment gateway on one or more further personal computing devices for collecting payment information and an electronic signature for each individual, and wherein the processor is further configured to execute the charter upon receipt of the signatures and payment information.

According to another aspect of the invention there is provided a computer implemented method of enhancing security of a shared payment system for charged goods or services. The method comprising: establishing a group of members who will pay for shared matters, inputting a payment mechanism to be used for each member, establishing a list of shared matters to be paid for under the shared payment system and their associated costs, establishing an e-contact address for each member, monitoring changes to either the payment authorisation details of each member and/or the matters to be included in the shared matters and the cost of the shared matters, the monitoring of the changes causing an alert input signal to be sent to an alert notice producer which in response to the alert input signal pushes an e-communication out to the group members, and notifying each of them that there has been a change, and preferably what the change was.

According to another aspect of the invention there is provided a computer implemented method of reducing the time taken to apportion a share of joint expenses and of policing the payment of an agreed share of the joint expenses of a group of members who share expenses. The method comprising: each member creating an electronic record of their e-contact address and payment details of how they will allow automatic payment of their share of the joint expenses, one or more members creating a list of shared matters the costs for which will be shared by the group members, a computer determining a predicted amount for the shared expenses and determining each member's share of the shared expenses, the computer communicating to each member electronically the list of shared matters and the predicted amount, the computer causing each member to contribute their share of the predicted amount using their payment details, the computer requiring acceptance of the list of matters by each member prior to causing an initial deduction of their respective share of the shared costs using their payment details, and the computer placing an initial order for the shared matters, the computer re-ordering the shared matters at a set frequency and causing the payment from each of each members of their share of the reordering amount , using their payment details, and the computer having an interface generated that the members can access to enable the members to modify the choice of what matters are shared matters in the shared matter list.

Optionally the computer may have an interface capable of allowing the members to alter the identity of the source of each of, or at least one of or some of, the shared matters that are ordered automatically and pursuant to such alteration causing the shared matters to be ordered in future from the altered source.

According to another aspect of the system there is a provided an application configured to carry out the method of the preceding aspects.

According to another aspect of the invention there is provide an application software (app) capable of being loaded onto a mobile telephone or other computing device, the app having:
a mechanism to enable a user to join a shared household group by entering their identity;
a security feature (e.g. a digital signature or password) to ensure that when someone identifies themselves as that user they have access to the security feature and details for a payment means (e.g. a bank account, credit card, digital payment provider) and a mechanism to authorise a transfer of money from the payment means to one or more specified recipients;
a mechanism to allow a user to view a list of regular supplies (for example goods and/or services) that are being ordered and delivered using money from their payment means, and the frequency or dates of delivery and/or payment;
a mechanism to allow a user to alter the amount of a supply on the list and/or to change a designated supplier of the supply;
the ability to cause to be presented to the user on their computing device their contribution to the cost of the list of regular supplies;
the ability to resign from the shared household group, terminating further payments from their payment means;
the ability to cause to be displayed to the user the fact that another member of the share household group has resigned from the group, promptly after a member of the group resigns.

### BRIEF DESCRIPTION OF THE DRAWINGS

A description of the invention will now be described, by way of example only, with reference to the accompanying drawings, in which:
Figure 1 shows a system diagram for a financial management system;
Figure 2 shows a process flow diagram for a computer implemented method of managing shared finances;
Figure 3 shows a further process flow diagram for a computer implemented method of managing shared finances;
Figure 4 shows a process flow diagram for modifying a management of shared finances;
Figure 5 shows a process flow diagram for a computer implemented method of determining a charter for a group of individuals;
Figure 6 shows a simplified representation of user inputs for carrying out the methods shown in the other Figures;
Figure 7 shows a screenshot of an example of an input field as part of the user inputs of Figure 6;
Figure 8 shows a further screenshot of an example of an input field as part of the user inputs of Figure 6; and
Figure 9 shows a further screenshot of an example of an input field as part of the user inputs of Figure 6.

### DETAILED DESCRIPTION

### The system

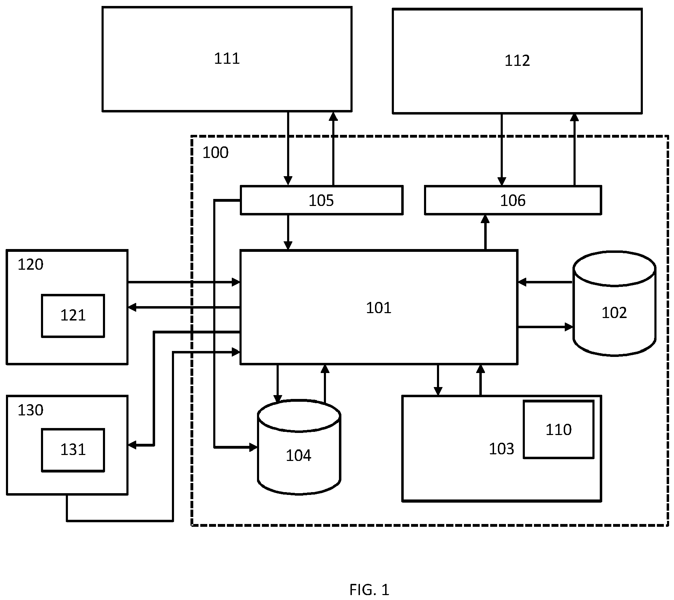

Figure 1 shows a financial management system 100 for use by a group of individuals who share at least some expenses relating to shared goods and/or services.

A first individual of the group of individuals uses a personal computing device 120 (for example a mobile phone) to access a user interface 121 of the financial management system 100. The user interface 121 may be provided at a web address, hosted by a process control server 101 of the financial management system 100. The user interface 121 may also, or instead, be provided as a program or application run on the personal computing device 120. The first individual may interact with the user interface 121 through using an input means of the personal computing device (e.g. a capacitive touch screen of a mobile phone).

The user interface 121 provides a means by which the first individual can input data relating to at least one of, and possibly some or all of, the group of individuals into the financial management system 100, and particularly relating to shared accommodation of the group of individuals, i.e. shared accommodation data. The shared accommodation data, and any other relevant information input into the system may be designated shared expenses data. The server 101 communicates this data to a first database 102. The first database is contained within an electronic data storage device such as a magnetic disk or any other suitable storage type.

The server is connected to a data input 105 and a data output 106. Whilst the main function of the data input 105 is to receive data for provision to the server 101, the data input 105 is also operable to receive and output data from the server. Similarly, whilst the main function of the data output 106 is to receive data for provision to the server 101, the data output 106 is also operable to receive and output data from the server 101.

The input 105 is configured to receive and send data from and to an external or third party data source 111 or sources. The external data source comprises an external data provider (for example a residential database, an online retailer, a utility provider, a price comparison website, or any source that may provide data relevant for characterising the shared household or providing information relating to goods and/or services - such as a gas supplier's tariff(s)). The input is configured to receive and send data to a plurality of external data sources. The input may provide some of the data provided by the first individual in order to supplement the data. For example, the first individual may supply a post code and house number for the shared accommodation data, the input may then provide this data to the external data source which may then return more detailed information (such as the number and types of rooms in the house) to bolster the shared accommodation data. The external data source may additionally or alternatively provide historic data relating to household costs, such as typical annual gas or electricity costs for that property.

The output 106 is configured to send and receive data to and from goods and/or service providers 112. The goods and/or service providers 112 comprises various types of goods and/or service providers. Some or all of the goods and/or service providers 112 may also be external data sources 111.

The output 106 is configured to order, or otherwise instruct the provision of, an agreed upon selection of goods and/or services agreed at an agreed upon cadence or agreed upon dates.

The data input 105 and the data output 106 each comprise one or more application program interfaces (APIs), wherein each API is linked to at least one of the data providers.

The input 105 comprises an API associated with a data provider, or multiple APIs associated with respective data providers. For example, the data may be housing data and the data provider may therefore be an estate agent aggregator (e.g. Zoopla (RTM)) or a national census database.

The input 105 is configured to provide data collected from the external data source 111 to a second database 104. The second data 104 base comprises a look-up table. The look-up table is populated with data from the external data source 111.

Populating the look-up table from a third data party source may reduce the data storage requirements for on the system as data may only need to be temporarily retrieved and stored. It also may allow for the most up to date data to be used, directly from the party that may be providing the goods and/or services. This provides a more accurate availability of goods and/or services, as well as projected costs.

The financial management system comprises a rules engine 103. The rules engine 103 comprises an algorithm that takes the shared accommodation data and outputs a charter. The charter is a combined contractual agreement and list of goods and/or services for the individuals to agree to. The charter comprises a list of goods and/or services that the financial management system determines as being a probable list of goods and/or services that the group of individuals are likely to want to purchase as a group, bearing in mind the size of the group. The charter also includes a field for receiving an acceptance of the charter from each of the group of individuals. The field may be an input field for receipt of a digital signature or other means of acceptance such as a piece of identifying information that can be used to show acceptance such as a password or a key. Requesting a digital signature may provide improved security and reduce the opportunity for fraudulent or unwarranted modifications to the charter. The rules engine 103 accesses the look up table in the second database 104 in order to extract the specific, relevant goods and/or services. For example, the algorithm may determine that the group of individuals will require a certain number of rolls of toilet paper at a particular frequency. The look up table may contain several different brands and package sizes of toilet paper so the algorithm can select an appropriate size and brand in dependence on the shared household data. For example, for a group of individuals comprising predominantly students then the algorithm may select a low cost or value option, whereas for a group of individuals comprising working professionals, or sharing accommodation in a postcode considered to be affluent, a more premium option may be selected. The rules engine 103 comprises a processor 110 for performing the above steps. The processor may be hosted elsewhere within the system 100, for example elsewhere on the server 101.

It will be appreciated that in some examples the first and second databases 102, 104 may be provided as part of a larger, single database, and/or be hosted on a single storage device or separate, respective storage devices.

The created charter is output to, or a link to the charter is output to further personal computing devices. The output may be provided as a further user interface, such as in the form of a portal 131 hosted by the server 101. The first personal computer device 120 may also be one of the further personal computer devices 130. Each individual of the group of individuals preferably accesses the charter via their own personal computing device 130. The portal provides input means for each individual to provide payment details and a digital signature. The payment details may then be stored in the database 102. The signed charter may also be stored in the database 102.

The output executes the charter through authorising payments to the various goods and/or service providers 112. In the case of the supply of goods, the physical address of the property is known to the system and an order for the delivery of goods to that address is made, along with payment to the supplier. For example supermarket groceries may be ordered from a supermarket for delivery or collection, or from a supplier such as Amazon, who in turn get the goods delivered. A consolidated payment (i.e. a payment that consolidates all of the individual payments from the each of the group of individuals) is provided from the financial management system to each of the goods and/or service providers at a regular cadence. The financial management system 100 therefore acts as a kitty, in that it pools resources (i.e. money) from all of the individuals in order to pay for the shared goods and/or services that it automatically orders. The financial management system debits each of the individuals for their contribution. An initial, upfront payment may be taken from each of the individuals. The upfront payment may be used to cover a first order or subscription. The upfront payment may also comprise a float, which may be used to cover price fluctuations in the goods and/or services or other unforeseen cost changes. The upfront payment may also comprise a deposit or subscription to cover use of the financial management system, wherein the deposit may be refundable upon agreement of the individuals to close the group (for example, when a shared household parts ways). Subsequent payments may then be received or taken at specific intervals (preferably monthly, but may also be weekly, bi-weekly or any other suitable cadence), to cover the costs of the goods and/or services for the next order. Annual subscriptions or costs (or other payments to goods and/or service providers that cover period longer than the payment cadence) may be allocated to be paid as part of the upfront payment or may be split between the regular payments. The financial management system may be operated by a payment provider. The payments to the financial management system may be provided to the payment provider. The financial management system provides the consolidated payment to each of the goods and/or service providers by way of invoice. The payment provider may have accounts with each of the goods and/or service providers in order to facilitate the payments by invoice. The financial management system may act as a credit system, in which case debiting of the individuals may be done after payment is made. In other examples the financial management system may act as a debiting system in that it pools the money from the individuals in advance and then enacts a single consolidated debit payment to each of the goods and/or service providers.

### The method

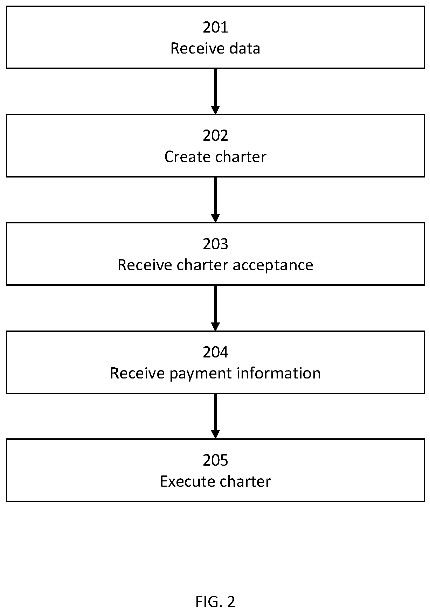

A method for implementation by a computer or computer system is shown in Figure 2. The method may be implemented by the financial management system 100 described with reference to Figure 1, but may also be implemented on any suitable computer or system.

In a first step 201 data relating to a group of individuals sharing expenses relating to shared foods, goods, and/or services is received. A first individual of the group of individuals may create a profile using a piece of contact data and geographic location data. Once the profile is created the data is requested by the system and provided to said system by the first individual. The data received from the first individual may be partial data, or starting data. Further data may be received from an external source. The data received from the external source may be determined in dependence on the received initial data. For example, data relating to the accommodation may contain several different pieces of information, but the first individual may only need to provide an address (e.g. a house number and postcode) and the system may then request and subsequently receive any further pertinent data from an external source. The further data in this example may include the type of property, the number of rooms, the type of rooms in the property etc.

The number of people living at the shared property is also input, or otherwise known to a system for generating a charter (see below) so as to determine predicted volumes of consumables that will be typically needed.

In a second step 202 a charter is created in dependence on the received data. Creating the charter includes populating a recommended list of goods and services and a recommended purchasing volume and/or order frequency for said goods and/or services.

In a third step 203 acceptance of the charter is received. The acceptance is received from each of the individuals of the group of individuals. The acceptance may be received as a digital signature indicating approval of the charter. The digital signature may be linked with a piece of contact information. The piece of contact information may be a mobile telephone number, an email address, or any other e-communication contact means.

In a fourth step 204 payment information is received. The payment information is received from each of the individuals of the group of individuals. The payment information may be bank account details, which may be used to setup a direct debit. Other payment information may be provided in dependence on teach individual's preference. For example e-payment information (e.g. PayPal (RTM)) may be provided, or debit or credit card payment details.

The fourth step 204 may be performed in parallel with, before, or as part of the third step 203.

In a fifth step 205 the charter is executed. Executing the charter comprises ordering the agreed upon goods and/or services. A confirmation may be provided to each of the individuals or at least the first individual that the charter has been successfully executed.

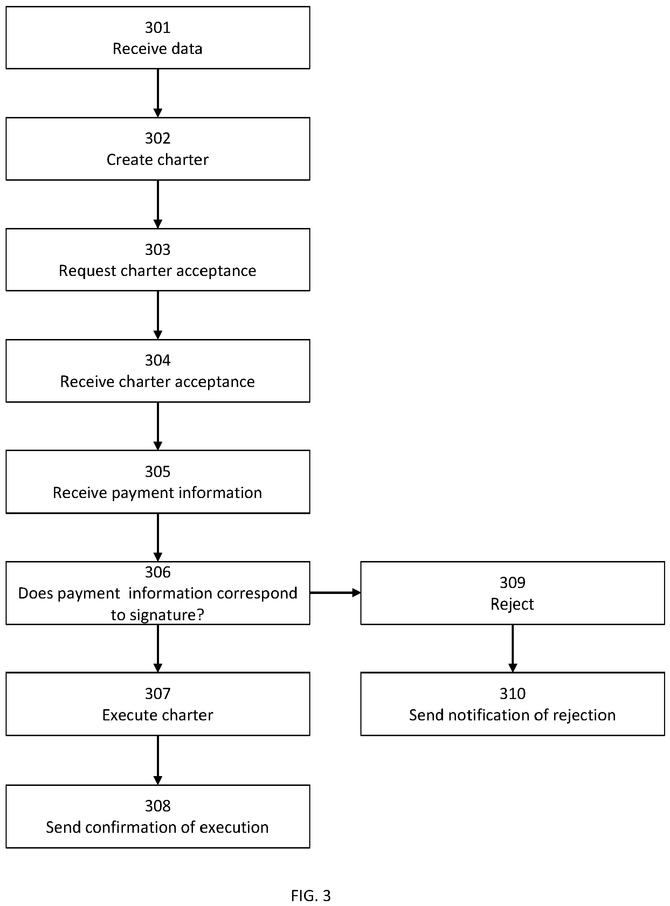

A further method for implementation by a computer or computer system is shown in Figure 3. The further method provides further options steps to the method of Figure 2 that may be implemented in some examples.

In a first step 301 data relating to a group of individuals sharing expenses relating to shared foods and/or services is received. A first individual of the group of individuals may create a profile using a piece of contact data and geographic location data. Once created the data may is requested by the system or computer and provided to said computer by the first individual.

In a second step 302 a charter is created in dependence on the received data in the same manner as the second step 202 of the previous method.

In a third step 303 acceptance of the charter is requested from each of the individuals of the group of individuals. Acceptance is requested through the provision of a link by which each of the individuals may access the charter in order to review it.

In a fourth step 304 acceptance of the charter is received from each of the individuals in the same manner as the third step 203 of the previous method.

In a fifth step 305 payment information is requested from each of the group of individuals in the same manner as the fourth step 204 of the previous method.

The fifth step 305 may be performed in parallel with, before, or as part of the third step 304.

In a sixth step 306 a check is performed to check whether the acceptance corresponds to the payment information. The majority of payment types are now linked with a piece of contact data of an individual, for example a phone number. The check may therefore comprises checking whether the two piece of contact information associated with the acceptance corresponds to the piece of contact information associated with the payment information.

The check may therefore provide an anti-fraud improvement over methods of the prior art. It may ensure that the individuals provide correct payment details, and prevents false details from being given. Furthermore, using online payment methods removes the chances of counterfeit cash funds being used to pay for goods and/or services, which can be a problem with cash based shared cost systems.

If the acceptance corresponds to the payment information then the methods moves to the seventh step 307. In the seventh step 307 the charter is executed in the same manner as the fifth step 205 of the previous method.

Once executed, or once executing is approved to go ahead, the method moves on to step 308. At step 308 a confirmation is sent to at least the first individual. The confirmation may be sent to all of the individuals.

If the payment information and approval are deemed not to correspond at the sixth step 306 then the method instead moves to a ninth step 309. In the ninth step the acceptance is rejected.

If rejected at the ninth step 309 then the method proceed to the tenth step 310. The tenth step 310 comprises sending a notification of rejection to one of the individuals. The individual may be the individuals whose approval was rejected and/or the first individual.

Implementing this method reduces the administrative burden for a group, and therefore increases the efficiency by which finances can be managed. Further improvements over the prior art relate to security, as fraudulent claims of purchases and whether payments have already been made are prevented.

### Modifications

Whilst all of the individuals must be in agreement and happy with the contents of the charter for it to be executed, circumstances may change or changes may to the charter may otherwise need making.

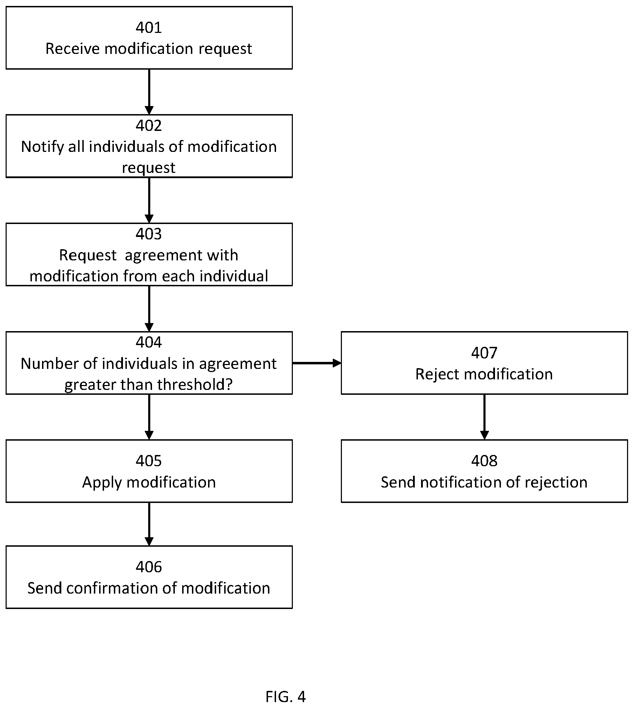

A method for implementation by a computer or computer system is shown in Figure 4. The method may be implemented by the financial management system 100 described with reference to Figure 4, but may also be implemented on any suitable computer or system.

In a first step 401 a request to modify the charter as previously agreed upon using the preceding methods (or otherwise) is received. Any of the individuals who have a contact detail linked to the charter may propose a change and request a modification.

In a second step 402 at least one of the other individuals is notified of the modification request. Preferably all of the individuals are notified.

In a third step 403 each notified individual is requested to provide agreement with the modification.

The third step 403 may be performed in parallel with or as part of the second step 402.

In a fourth step 404 the number of individuals who concur with the modification request is totalled and compared to a threshold number of individuals. The threshold may be set at half of the total number of individuals. Alternatively, other thresholds may be set. In some alternative implementations concurrence from all of the individuals may be required and so the threshold will be the total number of individuals of the group of individuals.

If the number of individuals who accept the modification request is equal to or greater than the threshold then the method moves to a fifth step 405. In the fifth step 405 the modification is applied

Various changes may be made to the charter in dependence upon the requirements and/or preferences of one or more of the individuals of the group of individuals.

A non-exhaustive list of examples of modifications that may be requested includes:
- Change of goods and/or services,
- Addition of new goods and/or services
- Pause of goods and/or services
- Reduction in amount of goods and/or services
- Increase in amount of goods and/or services
- Cancellation of goods and/or services
- Change on service level of services
- Substitution of goods and/or services

Not all changes need to be agreed upon. For example, pausing particular goods and/or services for a short period - e.g. one month, may be instigated without requiring concurrence. This reduces administrative burden on the group. The method may therefore skip the second step through to the fourth step and simply apply the modification if requested and notify the group of individuals accordingly. In some embodiments pausing the supply of goods is allowed on the request or one member, or a small number of members, but not pausing the supply of utility services such as gas and electricity or internet services, which may be considered more critical than the supply of milk or bread, for example.

### Creating charter

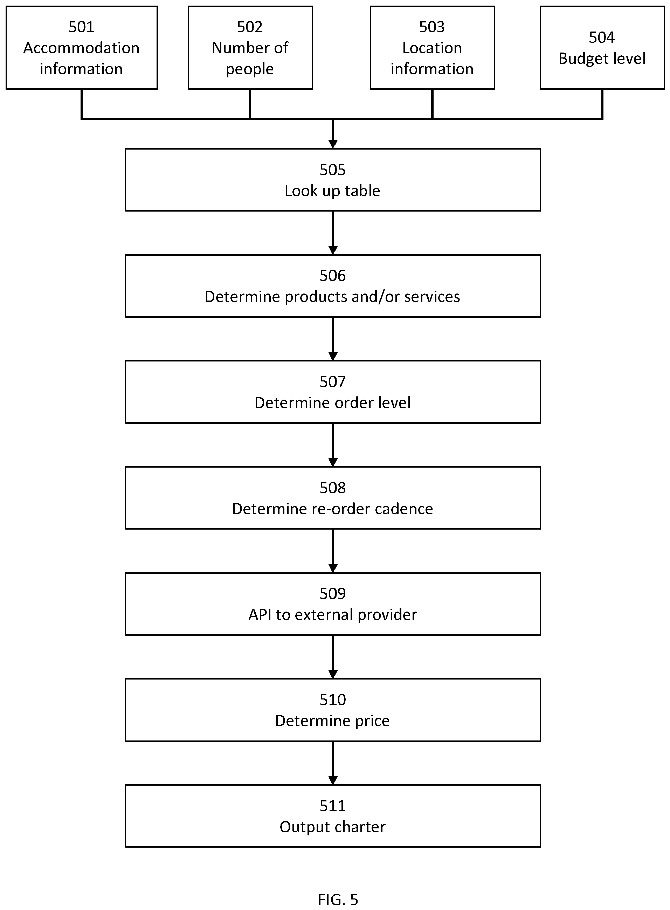

The method of creating the charter shall now be described with reference to Figure 5. The method of Figure 5 may be contained within the second steps 202, 302 of creating the charter in Figures 2 and 3.

The method shown in Figure 5 corresponds to the algorithm comprised within the rules engine 103 of the financial management system 100. The financial management system implements the rules of the rules engine 103 as shown in the below steps.

Various pieces of input information are provided to the system 100 which may be provided by the first individual or retrieved by the system from external sources. The retrieval may use the APIs of the external sources.

At a first step 501 information relating to the accommodation shared by the group of individuals is provided.

At a second step 502 an integer indicative of the number of individuals that the group of individuals consists of is provided.

At a third step 503 information relating to the location of the accommodation is provided.

At a fourth step 504 a budget level of the group of individuals may be provided.

The first, second, third and fourth steps 501, 502, 503, 504 may be performed in any order and/or in parallel.

At a fifth step 505 the information provided in the first to fourth steps is then applied to the look up table contained within the first database.

At a seventh step 507 the order quantity for each of the products and/or services is automatically determined. The determination is made in dependence upon the number of individuals sharing the accommodation.

At an eighth step 508 a re-order cadence for each of the products and/or services is automatically determined. The determination is made in dependence on the type of goods and/or service and the number of individuals. For example, some services (such as internet provision) may only need to be ordered annually and some spoilable goods (such as groceries) may need to be ordered as often as weekly.

At a ninth step 509 the system access data held by at least one external provider through the use of an API associated with the or each external provider.

At a tenth step 510 the price for each of the goods/and or services is determined. The determination is made through the retrieval of price data from the external providers. A per individual cost may then be determined. The per individual cost may be the total costs based on the prices for all of the goods and/or services divided equally between the individuals. Determining a per individual cost may comprise automatically calculating a payment contribution.

Automatically calculating a payment contribution reduces the burden on one or more of the group of individuals of calculating the respective contributions. It also reduces the chances of conflict caused by miscalculations, whether through human error or more purposeful miscalculations. The automatic calculation therefore provides a fairer and less fraud-prone solution than the methods of the prior art.

At an eleventh step 511 the charter is output. The charter comprises all of the information determined in steps six through ten 506-510. The charter is output to and saved within the electronic storage for future retrieval by the system and access by each of the individuals.

### User Interaction

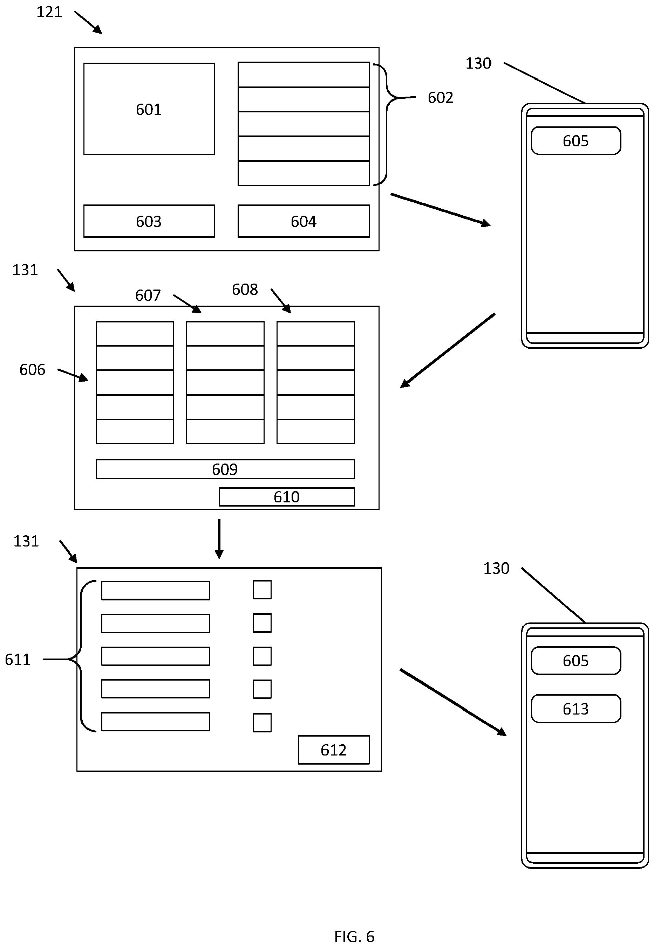

Figure 6 provides a representation of the user interfaces 121, 131 according to examples of the invention from the perspective of one or more of the individuals of the group of individuals as the method is performed. In the first stage a first individual registers a new shared household using the user interface 121. Details of the accommodation are provided. The accommodation details may include at least the address of the building. Other details may include the number of rooms and types of rooms in the house (e.g. four bedrooms, two bathrooms, one kitchen, one dining room, one living room). Details of the housemates are also provided. The housemate details comprise at least one piece of contact information. The piece of contact information is preferably a mobile phone number, but may be any piece of contact information that allows the sending of a registration link. The piece of contact information may therefore be an email address or other e-contact option.

The user interface provides a plurality of user inputs.

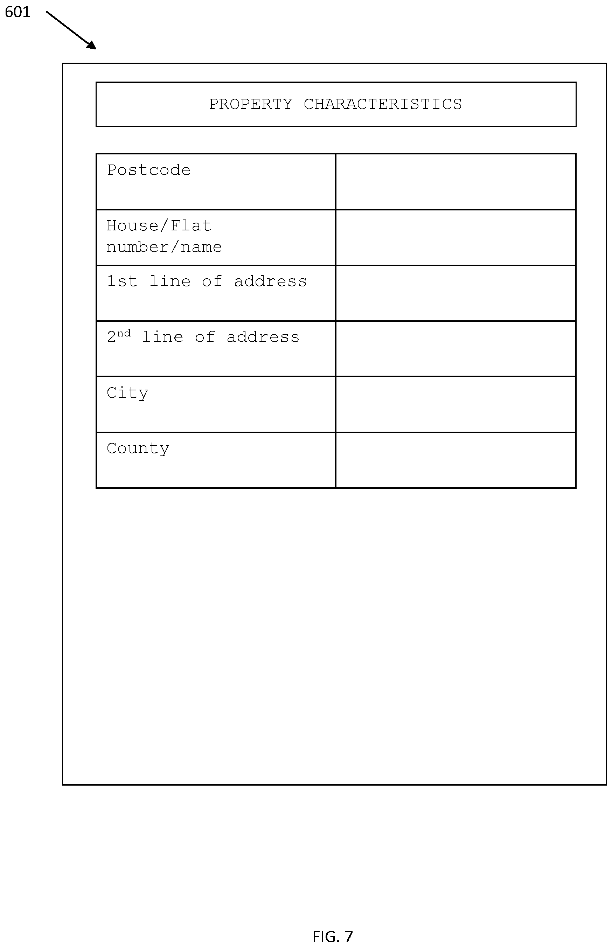

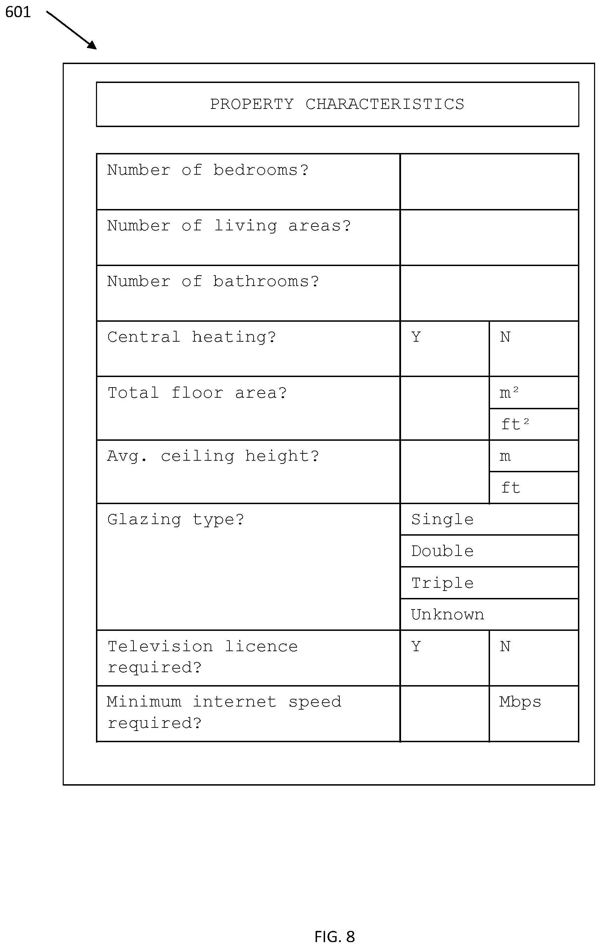

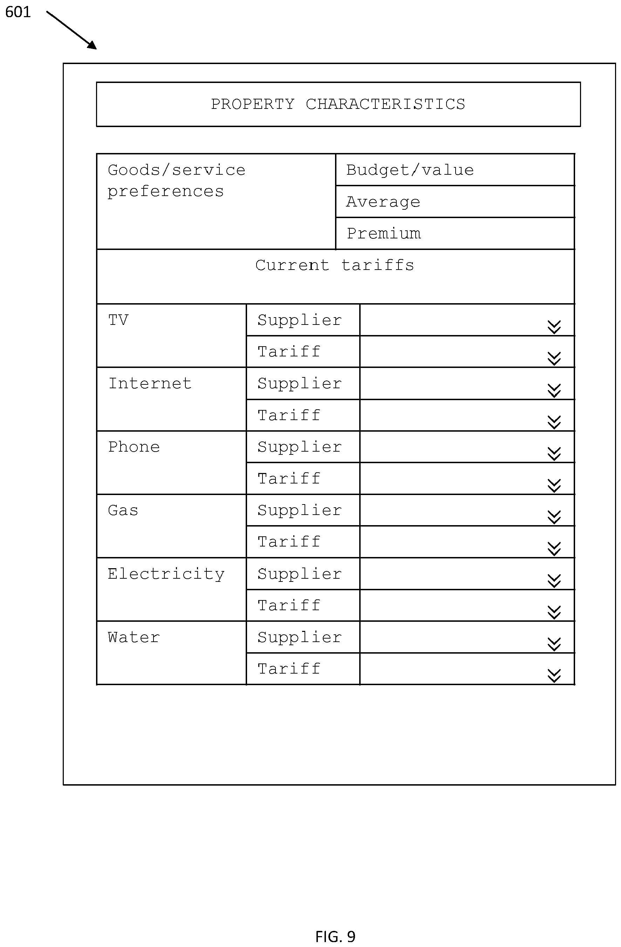

An accommodation input 601 is configured to receive information relating to the physical residence of the group of individuals. The information may comprise at least a means of identifying the accommodation. This may be manually inputting an address, inputting a post code and building number or any other suitable means of identification, dependent on geographic location. Figures 7 to 9 provide further detailed examples of the accommodation input 601 that may allow the first individual to manually input various types of information. The more information that may be provided the more tailored the resulting charter (i.e. the lists of goods and/or services and their recommended purchase/order frequency) will be. Further accommodation data may be either automatically populated by data received at the input or manually input by the first individual. As such, in one example the first individual manually fills in at least some, or in some case most or all, of the fields (or similar fields, which may be carried in dependence on territory or implementation) of the accommodation input 601. In another example the first individual simply puts in information to identify the property and the rest of the information is automatically populated. The first individual may then review or modify the input data to confirm its accuracy.

A group details input 602 is configured to receive information relating to each individual of the group of individuals. The information may comprise at least a piece of contact information for each individual. The piece of contact information may be a mobile telephone number, but may instead be an email address, or any other e-address that is linked to a single user. The user may save their progress by selecting a save input 603 or through an auto-save function which saves the progress of the creation of the charter to a profile of the first individual, wherein the profile is linked to contact data of the first individual. Once saved, a draft charter may be created that can be reviewed by the first individual. Reviewing the charter may provide the first individual the option to modify the proposed charter to more closely align with the first individual's knowledge of the shared accommodation and the group of individuals. Reviewing and/or modifying the charter is an optional step and the charter may be sent to all individuals in the next stage without a preliminary review.

A confirmation input 604 is configured to receive a confirmatory input from the first individual that all of the other input details are correct and that the charter is to be shared with the rest of the group of individuals. Receiving the confirmatory input saves all of the data which is provided by the server 101 to the database 102. Confirming the details automatically generates a hyperlink for each individual of the group of individuals (optionally including the first individual in dependence on the configuration of the user interface). Alternatively, a single hyperlink may be created that can be shared with the entire group.

The hyperlink or hyperlinks are automatically sent to each of the individuals as part of an e-message 605 (such as a text message, email or e-message through a messaging application). Each e-message may further comprise a piece of security information or a digital signature to confirm its authenticity. In some examples the hyperlink is generated but not sent by the system. Rather, the first individual is directed to copy and paste the hyperlink into an e-messaging application. This therefore provides an automatic validation to the other individuals as to the authenticity of the link as it is received directly from a known individual, rather than a potentially unknown source.

Each individual receives the e-message 605 comprising their hyperlink on a personal computing device 130. The personal computing device 130 may be a mobile phone, or may be a tablet, laptop or any other device capable of receiving e-messages. AS well as the hyperlink the message may further comprise information relating to the household and/or the first individual in order to provide confidence to each individual of the message's validity.

Upon clicking the hyperlink each individual is taken through to a web-based portal 131. The portal 131 is configured to receive information that is input by the individual and provide information relating to the charter to the individual. In Figure 6 the inputs and information displays are split over two windows of the portal 131, in other examples the portal may be on a single page or on multiple pages. A first set of information is provided in field 606. The first set of information 606 provides the list of goods and/or services to be ordered/provided. A second set of information 607 provides the cadence for which the goods and/or services may be provided. In some example the cadence information 607 may be omitted to avoid over-informing the individual. A third set of information provides costs/charges for each of the goods and/or services provided in the list go goods and/or services 606.

As well as the planned ordering list 606, 607, 608 the charter may also comprise a written agreement or contract 609 which each individual is to sign up to. Sometimes it does not have this at all. The agreement may comprise a declaration that the individual is happy with the all of the details and that the individual will agree to payment being taken in order to contribute to the shared expenditures of the group of individuals. A digital signature input 610 is provided by which the individual can provide a digital signature or other piece of confirmatory sign-off that indicates they agree to the charter.

The portal 131 further comprises a payment information input 161 by which the individual can indicate a preferred payment method. Payment information is provided by the individual. Payment information may comprise bank details, for the purposes of direct debit, credit or debit card details for automated payments, or any other suitable payment types such as e-payment solutions (e.g. PayPal (RTM)).

Once accepted a further e-message 613 is sent to the individual and the first individual confirming acceptance of the charter.

If an individual does not agree to the charter then a notification is sent back to the first individual. As part of rejecting the charter the individual may provide a suggestion for a modification to the charter.

It will be seen that at least in some embodiments of the invention there is an improvement in the efficiency and security of administering the finances of a shared accommodation, and that fraud, or an accidental mistake, is reduced or at least made more visible to members of the household.

In some embodiments each household member can see the goods or services being collectively bought, and preferably their contribution. The goods and services are ordered/bought automatically. This reduces the level of distrust between household members, ensures continuity of supply of services and goods, and if the embodiment collects the funds before ordering/consuming the services or goods it avoids defaulting on promises to pay. This also de-stresses relationships between household members.

In some embodiments the transparency of the transactions to all household members helps to mitigate attempts at cheating and fraud.

In embodiments where an alert is sent to all members when a member removes their agreement to pay their share, this helps to reduce fraud by a member disappearing after having used resources/rented accommodation, without paying. An alert that a member has cancelled their payment mechanism enables other members to take that into account when they see the said member.

Similarly, some embodiments may have an alert sent to members if an attempt to gather the agreed payment from one member is unsuccessful (possibly because their payment account does not have enough money in it/has reached its limit). This too can alert other members to the fact that they may not see the money and will be left short.

In some embodiments the charter allows any shortfall from one member to be obtained from the other members automatically, with an alert to them that it is happening/has happened, and the amount obtained.

In one embodiment the only personal information visible to all members is a name and a mobile phone number for the other members and each member inputs their own payment mechanism details.

In some embodiments the charter is produced and maintained by a charter algorithm that learns from modifications to ordered goods or services and sets the future standing orders for goods and services using the learned historic information.

The system/method/ app may connect to Amazon services (or the like) for the ordering and delivery of things. An image of the goods being ordered may be provided and the current prices, for example from Amazon ™ or the like.

The communication between group members about setting up the shared kitty goods and services may be via a common communication platform such as WhatsApp ™.

In the examples and embodiments described above the group of individuals may instead comprise a group of companies rather than a group of house mates. The mechanisms and methods are comparable in such systems but the goods and services may vary. For example, a group of companies sharing a building may agree to share the costs of supplying security, infrastructure (such as high speed internet), printing facilities, confidential document disposal, maintenance services, gardening services or any other business expenses. In these and other examples the group of companies may be co-owned or otherwise related, or may be teams or departments within a single company or spread across several companies. The group may agree to apportion business costs across the group. This may improve accounting efficiencies and reduce the occurrence of "wooden dollars" whereby internal payments are made for goods or services but does not lead to increased revenue for the business. This can therefore reduce operational inefficiencies. In one example a group of related companies may have a single legal department that provides services for all of the companies. The shared expenses data may therefore be related to the services used and the size of the respective companies. The payments may then be pre-made into a kitty thereby reducing the chances for accounting errors and ensuring smooth operation of the business relationships. Other examples of shared expenses could be the costs of an accounts department, or an IT department, or a Human Resources department, or a Typing department, or a Translation department, or a Marketing department, or shared vehicles - all of which are used by different companies. Shared resources can be apportioned between the companies/legal entities/business divisions that choose to join in the kitty arrangement.

Examples of the goods and/or services that may be supplied using the present kitty invention include those recited in the background of this application.

Implementing some embodiments of the method reduces the administrative burden for a group, and therefore increases the efficiency by which finances can be managed. Further improvements over the prior art of some embodiments may relate to security, as fraudulent claims of purchases and whether payments have already been made are prevented.

Various modifications can be made to the examples described above without departing from the scope of the appended claims. Features of the examples and embodiments may be exchanged, combined, omitted or adapted. The teaching of the specification should be taken as a whole with no limitation placed on scope of the appended claims by reference to the included description and drawings.

## Claims

1. A computer implemented method for improving the efficiency of managing finances for a group of individuals, the group of individuals sharing a set of expenses relating to charged goods and/or services, the method comprising:
receiving (201) shared expenses data;
automatically creating (202) a charter in dependence on the shared expenses data;
receiving (203) an acceptance of the charter from each individual of the group of individuals;
receiving (204) payment information for each individual; and
upon receipt of the acceptance and payment information, executing (205) the charter.

2. A computer implemented method according to claim 1 wherein creating the charter comprises automatically generating a recommended list of goods and/or services in dependence on the shared expenses data.

3. A computer implemented method according to claim 2 wherein creating the charter further comprises automatically generating a recommended purchasing frequency for the goods and/or services in dependence on the shared expenses data.

4. A computer implemented method according to claim 2 or claim 3 further comprising calculating a payment contribution for each of the group of individuals, and optionally wherein each of the calculated payment contributions is equal to the other calculated payment contributions.

5. A computer implemented method according to any one of claims 2 to 4 wherein executing the charter comprises ordering the delivery of the goods and/or services to a designated address and arranging payment for the goods and/or services.

6. A computer implemented method according to any preceding claim further comprising receiving a modification request (401) and modifying (405) the charter in dependence on the request.

7. A computer implemented method according to claim 6 comprising sending an alert notification (402) to the group of individuals in dependence upon the receipt of the modification request.

8. A computer implemented method according to any preceding claim further comprising requesting (303) the acceptance from each of the individuals.

9. A computer implemented method according to claim 8 wherein requesting (303) the acceptance from each of the individuals comprises generating a hyperlink.

10. A computer implemented method according to claim 9 wherein requesting (303) the acceptance from each of the individuals further comprises sending the hyperlink to each individual.

11. A computer implemented method according to any preceding claim wherein the shared expenses data comprises data relating to various data categories.

12. A computer implemented method according to claim 11 wherein the data categories comprise one or more of:
a number of rooms in a shared accommodation wherein the shared accommodation is a residence shared by the group of individuals;
a room type for each of the rooms in the shared accommodation;
a number of people living in the shared accommodation;
a geographic location of the shared accommodation; and
a budget level of the shared accommodation.

13. A computer implemented method according to any one of claims 2 to 12 further comprising connecting to a third party data source and populating the list of goods and/or services with data received from the third party data source.

14. A computer implemented method according to claim 13 wherein connecting to a third party a data source is implemented through an API of the third party data source.

15. A computer system for managing finances for a group of individuals, the group of individuals sharing a set of expenses relating to charged goods and/or services, the computer system comprising:
a server (101), the server configured to provide a user interface (121) for collecting shared expenses data on a personal computing device (120) of at least one of the group individuals;
a processor (110), the processor (110) configured to automatically generate a charter in dependence on the collected shared expenses data, the charter specifying the purchase of identified goods and/or services;
wherein the server is further configured to provide a payment gateway (131) on one or more further personal computing devices (130) for collecting payment information and an agreement or acceptance from each individual to payment being made for the charter- specified goods and/or services, and wherein the processor (110) is further configured to execute the charter upon receipt of the signatures and payment information to cause delivery of the charter-specified goods and/or services and to cause payment from the individuals for the goods and/or services to be delivered.
